Europäisches Patentamt

European Patent Office

Office européen des brevets

(11) Numéro de publication : **0 424 443 B1**

# (12) FASCICULE DE BREVET EUROPEEN

(45) Date de publication du fascicule du brevet :
**07.10.92 Bulletin 92/41**

(51) Int. Cl.$^5$ : **G11B 25/06,** G11B 15/56

(21) Numéro de dépôt : **89908194.7**

(22) Date de dépôt : **10.07.89**

(86) Numéro de dépôt international :
**PCT/FR89/00366**

(87) Numéro de publication internationale :
**WO 90/00800 25.01.90 Gazette 90/03**

(54) **DISPOSITIF PERMETTANT DE RENDRE INDEPENDANTS, DANS LE TEMPS, UN DISPOSITIF D'ENREGISTREMENT SUR BANDE ET UN DISPOSITIF DE LECTURE DE LADITE BANDE.**

(30) Priorité : **13.07.88 FR 8809601**

(43) Date de publication de la demande :
**02.05.91 Bulletin 91/18**

(45) Mention de la délivrance du brevet :
**07.10.92 Bulletin 92/41**

(84) Etats contractants désignés :
**AT CH DE FR GB IT LI NL**

(56) Documents cités :
**EP-A- 0 229 996**
**BE-A- 0 502 057**
**FR-A- 1 050 390**
**FR-A- 1 087 749**
**GB-A- 1 053 372**

(56) Documents cités :
**US-A- 3 176 927**
**US-A- 3 235 195**
**US-A- 3 492 442**
**US-A- 3 733 719**
**US-A- 4 388 659**

(73) Titulaire : **VASILESCU, Dan**
**175, avenue du Roule**
**F-92200 Neuilly-sur-Seine (FR)**

(72) Inventeur : **VASILESCU, Dan**
**175, avenue du Roule**
**F-92200 Neuilly-sur-Seine (FR)**

(74) Mandataire : **Portal, Gérard et al**
**Cabinet Beau de Loménie 55, rue**
**d'Amsterdam**
**F-75008 Paris (FR)**

EP 0 424 443 B1

## Description

La présente invention concerne un dispositif permettant de rendre indépendants, dans le temps, un dispositif d'enregistrement sur bande et un dispositif de lecture de ladite bande.

L'invention objet du brevet se réfère au domaine technique dans lequel on utilise une bande pour l'enregistrement et la lecture des signaux, de nature quelconque, ainsi enregistrés.

Selon le schéma le plus connu de l'utilisation d'une bande pour l'enregistrement et la lecture de signaux (soit analogiques, soit numériques), la bande en provenance d'une bobine débitrice défile devant une tête d'enregistrement, puis devant une tête de lecture, puis est récupérée sur une bobine réceptrice.

Les principaux domaines d'application de ces techniques sont :
– l'audiovisuel (magnétoscopes, magnétophones) professionnel, grand public, recherche, industrie, médecine, etc.,
– l'informatique : ordinateurs utilisant la bande comme support pour le stockage des informations.

Dans toutes ces applications, l'enregistrement et la lecture des informations peuvent avoir lieu :
– soit simultanément (enregistrement et lecture en même temps). C'est le cas des magnétoscopes ou des magnétophones classiques, l'émission enregistrée pouvant être visionnée (ou écoutée) pendant l'enregistrement,
– soit en différé (enregistrement et lecture à des moments différents). Dans ce cas, quand on utilise un seul appareil, il faut attendre la fin de l'enregistrement avant de dérouler la bande en arrière et de procéder à la lecture. La durée du différé est forcément plus importante que la durée de la séquence enregistrée.

Or, il peut être souhaitable de rendre indépendantes, dans le temps, la partie du dispositif réalisant l'enregistrement et la partie du dispositif réalisant la lecture. C'est là le but de la présente invention.

Dans la présente invention, on entend par l'expression "rendre indépendant dans le temps" le fait que la lecture de la bande peut être faite soit en différé par rapport à l'enregistrement, soit à une vitesse différente de la vitesse d'enregistrement, soit en combinant ces deux possibilités.

Pour réaliser ce but, il convient selon la présente invention de séparer physiquement le dispositif d'enregistrement du dispositif de lecture et d'intercaler entre ces deux dispositifs un dispositif de stockage de la bande. Il convient bien évidemment de prévoir les adaptations nécessaires des deux dispositifs connus (enregistrement et lecture) avec le dispositif de stockage.

Le dispositif selon l'invention est donc constitué par un élément fixe qui est un sous-ensemble d'enregistrement comportant une bobine débitrice et un dispositif d'enregistrement proprement dit et par un -élément qui est un sous-ensemble de lecture comportant un dispositif de lecture proprement dit et une bobine réceptrice dont la rotation est commandée par un moteur, le dispositif comprenant en outre une bobine intermédiaire circulaire (7) disposée entre le sous-ensemble d'enregistrement (1) et le sous-ensemble de lecture (3), caractérisé en ce que ladite bobine intermédiaire (7) est animée d'un mouvement de rotation, selon son axe, au moyen d'un moteur, et comporte à sa périphérie une surface d'appui rétractable (8) et un galet directeur (6) à partir duquel la bande est orientée vers le sous-ensemble de lecture, et en ce que ledit sous-ensemble de lecture (3) est solidaire de ladite bobine intermédiaire (7) et entraîné en rotation sur ladite bobine.

Dans la définition de l'invention fournie ci-dessus, on a pour des raisons de clarté, distingué le sous-ensemble d'enregistrement du sous-ensemble de lecture. Cependant tout spécialiste pourra comprendre à la lecture de ce texte que le dispositif selon l'invention est réversible c'est-à-dire que, moyennant des adaptations mineures relatives au sens de rotation et à la vitesse de rotation des bobines, lesdits sous-ensembles sont interchangeables. De même, chaque sous-ensemble peut comporter à la fois les éléments permettant l'enregistrement et les éléments permettant la lecture.

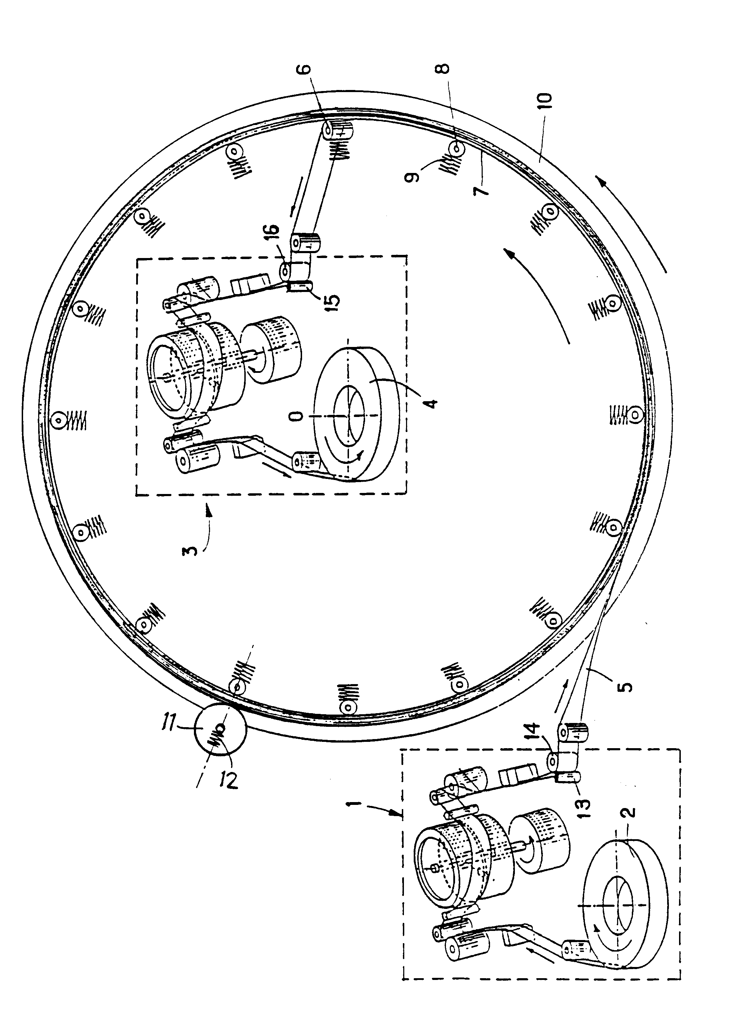

L'invention sera mieux comprise en se référant à l'exemple non limitatif suivant qui est illustré sur la figure.

La description de cet exemple permettra en outre de préciser certaines définitions et caractéristiques possibles de l'invention.

Sur la figure unique qui-est une vue schématique du dispositif selon l'invention, on a fait figurer :
– en 1 le sous-ensemble d'enregistrement ; ce sous ensemble connu comporte notamment une bobine débitrice 2, dont la rotation, selon son axe, est commandée par un moteur (non représenté), des têtes d'effacement vidéo et audio (non spécifiées), un cabestan 13 et un galet presseur 14 assurant notamment le défilement à vitesse contrôlée de la bande, ou le blocage de celle-ci, une ou plusieurs têtes d'enregistrement vidéo et audio et des galets d'orientation de la bande. La banale sortant du sous-ensemble d'enregistrement est dirigée vers la bobine intermédiaire.

Comme on l'a indiqué ci-dessus, cette expression "dispositif d'enregistrement" doit être interprétée au sens large qui peut se définir comme tout dispositif permettant la fourniture d'une bande enregistrée.
– en 3 le sous-ensemble lecture de structure assez proche de celle du sous-ensemble d'enregistrement, c'est-à-dire comportant notamment une bobine réceptrice 4 dont la rotation, selon son axe, est commandée par un moteur, un cabestan 15 et un galet presseur 16, une ou plusieurs têtes de lecture et des galets d'orientation de la bande,
– la bande 5 en provenance du sous-ensemble d'enregistrement s'enroule autour de la bobine intermédiaire et quitte cette bobine pour rejoindre le sous-ensemble de lecture grâce au galet directeur 6 ; on notera que le sous-ensemble de lecture 3 est monté intérieurement à la bobine intermédiaire, ce qui constitue l'une des originalités du dispositif selon l'invention;
– en 7 la bobine intermédiaire autour de laquelle s'effectue le stockage de la bande ; dans la réalisation de cet exemple cette bobine est essentiellement constituée par une roue (non représentée) portant à sa partie périphérique un certain nombre de galets 8 qui définissent une surface d'appui circulaire ; chaque galet 8 est monté, par exemple dans ladite roue, de façon à pouvoir effectuer un mouvement sensiblement radial (mouvement dont le rappel est réalisé grâce à des ressorts 9 par exemple) sous l'influence d'une force qui peut être provoquée par la traction réalisée sur la bande (traction réalisée par mise en mouvement de la bobine réceptrice 4) soit par des dispositifs convenables commandés ; ce mouvement radial des galets 8 est important pour assurer un enroulement convenable de la bande autour de l'ensemble desdits galets.

Les galets tournent autour de leurs axes soit sous l'influence de .la bande (par frottement), soit par entraînement mécanique (non représenté).

La bobine intermédiaire peut être réalisée soit sous la forme d'un disque ayant le palier dans son axe géométrique, soit sous la forme d'une roue sans moyeu (comme par exemple une jante de roue de vélo sans rayons), les paliers étant disposés sur la circonférence.

Cette variante permet de disposer de plus de place à l'intérieur de la bobine intermédiaire 7 pour y placer par exemple une tête tournante de lecture avec son entraînement

On notera que dans l'exemple représenté les axes de rotation de la bobine réceptrice et de la bobine intermédiaire sont confondus.

La bobine intermédiaire 7 est montée librement rotative autour de son axe sur un support non représenté et peut être commandée en rotation autour de son axe par l'intermédiaire d'un moteur non représenté.

Il est très important de noter que le sous-ensemble de lecture 3 et le galet directeur sont solidaires de la bobine intermédiaire et tournent avec elle ; par ailleurs ledit galet directeur est également de préférence muni d'un ressort permettant qu'il se déplace radialement.

On peut avantageusement disposer, sous la bobine intermédiaire, d'une platine telle que 10. Cette platine a le même axe de rotation que celui de la bobine intermédiaire mais est entraînée par un moteur différent de celui de ladite bobine intermédiaire.

On peut également prévoir un galet d'entraînement 11, dont la rotation autour d'un axe 0' assurée par un moteur non représenté et la pression simultanée contre la bande stockée sur la périphérie de la bobine intermédiaire, cette pression étant assurée par un ressort 12, assurent le maintien de la vitesse périphérique nécessaire pour assurer la réception de la bande 5.

Il est évident que les vitesses de rotation des divers moteurs utilisés dans le dispositif ont des vitesses de rotation intercorrélées pour tenir compte des divers paramètres d'émission de la bande, de réception de ladite bande sur la bobine intermédiaire, d'épaisseur de la bande sur ladite bobine et de réception de la bande. Ces intercorrélations sont classiques pour les fabricants spécialistes des enregistrements vidé ou audio.

La bande utilisée est de préférence d'une qualité spéciale et possède en particulier des propriétés mécaniques suffisantes pour résister aux efforts de traction et à une utilisation prolongée. Elle peut avantageusement présenter sur toute sa longueur des codes ineffaçables permettant de situer à chaque instant la position d'une image enregistrée sur cette bande. La longueur de la bande est fonction de l'utilisation prévue de l'appareil. En fait, cette bande n'étant pratiquement pas changée, on peut considérer qu'elle fait partie intégrante de l'appareil.

On va décrire maintenant certains modes d'utilisation du dispositif selon l'invention ; dans cette description, on négligera volontairement les problèmes (connus et résolus dans tous les lecteurs de bandes) provenant de la variation éventuelle de l'épaisseur de la couche de bande soit sur les bobines (débitrice et réceptrice), soit autour de la bobine intermédiaire.

En fonctionnement "enregistrement et lecture en différé" la bande en provenance du sous-ensemble 1 est dans un premier temps enroulée autour de la bobine intermédiaire 7 et fixée sur la bobine réceptrice 4 ; la mise en route du sous-ensemble 1 et de la bobine intermédiaire 7, alors que la bobine réceptrice 4 est à l'arrêt, provoque un stockage progressif de la bande autour de la bobine intermédiaire. Au moment choisi par l'utilisateur, on met en route la bobine réceptrice 4 et la bande est tirée de l'intérieur du rouleau stocké pour passer dans le sous-ensemble de lecture 3. On notera :
– que, pour assurer le déroulement de la bande par l'intérieur, la bobine intermédiaire 7 tourne à une vitesse angulaire légèrement différente de celle de la platine 10 ;
– d'une part que la lecture du film n'empêche nullement de continuer l'enregistrement et le stockage (ou un stockage progressif) de la bande ;
– d'autre part que la vitesse de lecture de la bande est indépendante de la vitesse d'enregistrement.

Autre exemple d'utilisation :

Le sous-ensemble 1 est réalisé de manière à permettre l'enregistrement des signaux en provenance d'une caméra vidéo rapide. Les images enregistrées sont visionnées en léger différé à l'aide du sous-ensemble 3 à vitesse normale, à vitesse réduite ou même avec arrêt sur image. Cette utilisation permet par exemple de contrôler et le cas échéant d'améliorer un processus de fabrication en agissant sur certains paramètres de base sans être obligé d'attendre la fin de l'enregistrement.

Pour assurer le rembobinage de la bande, il convient que les moteurs actionnant les bobines (débitrice, réceptrice et intermédiaire) puissent tourner dans le sens opposé. Les moteurs seront prévus pour ce:a. Lors du rembobinage (en supposant que l'utilisation ait été faite avec un sens de circulation de la bande de la bobine débitrice à la bobine réceptrice) la bande sera rembobinée sur le diamètre intérieur de la bobine intermédiaire. Cela est possible grâce au fait que les galets peuvent être animés, outre du mouvement de rotation suivant leur axe, d'un mouvement radial.

Le dispositif qui vient d'être décrit présente, en raison de sa conception originale de nombreux avantages et permet notamment la réalisaton d'une très grande variété d'opérations de fonctionnement.

Ainsi, dans le cas d'un magnétoscope, par exemple, le dispositif conforme à l'invention permet la réalisation des opérations suivantes :

1) - Enregistrement et stockage de bande ;

2) - Enregistrement, stockage de bande et simultanément lecture en différé d'une partie de la bande stockée ;

3) - Lecture de la bande stockée ;

4) - Avance rapide sur l'extérieur de la bobine intermédiaire 7 et en même temps lecture d'une partie de la bande stockée ;

5) - Avance rapide sur la bobine réceptrice 4 et enregistrement ;

6) - Retour rapide sur la bobine débitrice 2 et lecture d'une partie de la bande stockée ;

7) - Retour rapide sur l'intérieur de la bobine intermédiaire 7 et en même temps enregistrement.

## Revendications

1. Dispositif permettant de rendre indépendants, dans le temps, un dispositif d'enregistre,ment sur bande et un dispositif de lecture de ladite bande constitué par un élément fixe qui est un sous-ensemble (1) d'enregistrement comportant une bobine débitrice (2) et un dispositif d'enregistrement proprement dit et par un élément qui est un sous-ensemble de lecture (3) comportant un dispositif de lecture proprement dit et une bobine réceptrice (4) dont la rotation est commandée par un moteur, le dispositif comprenant en outre une bobine intermédiaire circulaire (7) disposée entre le sous-ensemble d'enregistrement (1) et le sous-ensemble de lecture (3), caractérisé en ce que ladite bobine intermédiaire (7) est animée d'un mouvement de rotation, selon son axe, au moyen d'un moteur, et comporte à sa périphérie une surface d'appui rétractable (8) et un galet directeur (6) à partir duquel la bande est orientée vers le sous-ensemble de lecture, et en ce que ledit sous-ensemble de lecture (3) est solidaire de ladite bobine intermédiaire (7) et entraîné en rotation sur ladite bobine.

2. Dispositif selon la revendication 1, caractérisé en ce que la surface d'appui de la bobine intermédiaire est constituée par une série de galets mobiles radialement.

3. Dispositif selon l'une des revendications 1 et 2, caractérisé en ce que l'on dispose, sous la bobine intermédiaire, une platine tournante (10).

4. Dispositif selon l'une des revendications 1, 2 et 3, caractérisé en ce que l'on prévoit un galet d'entraînement (11) avec ressort (12), entraîné par un moteur de manière à assurer une vitesse périphérique constante de la bande stockée (5).

## Patentansprüche

1. Vorrichtung zum zeitmäßigen Unabhängigmachen einer Bandaufzeichnungseinrichtung und einer Bandleseeinrichtung, bestehend aus einem feststehenden Element, u.zw. einer Aufzeichnungsuntergruppe (1) mit einer Ablaufspule (2) und einer eigentlichen Aufzeichnungseinrichtung, und aus einem Element, u.zw. der Leseuntergruppe (3) mit einer eigentlichen Leseeinrichtung und einer Aufwickelspule (4), deren Drehung durch einen Motor gesteuert ist, welche Vorrichtung weiters eine Umlaufzwischenspule (7) aufweist, die zwischen der Aufzeichnungsuntergruppe (1) und der Leseuntergruppe (3) angeordnet ist, dadurch gekennzeichnet, daß die Zwischenspule (7) durch einen Motor mit einer Drehbewegung um ihre Achse beaufschlagt ist und an ihrem Umfang eine einziehbare Auflagefläche (8) und eine Lenkrolle (6) aufweist, von der aus das Band zur Leseuntereinheit gerichtet wird, und daß die Leseuntergruppe (3) mit der Zwischenspule (7) verbunden und auf der Spule in Drehung versetzt ist.

2. Vorrichtung nach Anspruch 1, dadurch gekennzeichnet, daß die Auflagefläche der Zwischenspule durch eine Reihe von radial beweglichen Rollen gebildet ist.

3. Vorrichtung nach einem der Ansprüche 1 und 2, dadurch gekennzeichnet, daß unter der Zwischenspule ein Drehtisch (10) angeordnet ist.

4. Vorrichtung nach einem der Ansprüche 1, 2 und 3, dadurch gekennzeichnet, daß eine Antriebsrolle (11) mit Feder (12) vorgesehen ist, die derart durch einen Motor angetrieben ist, daß sie eine konstante Umlaufgeschwindigkeit des gespeicherten Bandes (5) gewährleistet.

**Claims**

1. Device for rendering independently operable in time, a tape recording device and a device for playing back said tape, constituted by a fixed element which is a recording sub-assembly (1) comprising a feeding reel (2) and a recording device proper, and by an element which is a playback sub-assembly (3) comprising a playback device proper and a receiving reel (4) of which the rotation is controlled by a motor, the device further comprising a circular intermediate reel (7) disposed between the recording sub-assembly (1) and the playback sub-assembly (3), characterized in that said intermediate reel (7) is imparted with a movement of rotation about its axis, by means of a motor, and comprises on its periphery a retractable bearing surface (8) and a controlling roller (6) from which the tape is directed towards the playback sub-assembly, and in that said playback sub-assembly (3) is fast with said intermediate reel (7) and driven in rotation on said reel.

2. Device according to claim 1, characterized in that the bearing surface of the intermediate reel is constituted by a series of radially movable rollers.

3. Device according to one of claims 1 and 2, characterized in that a rotating plate (10) is placed under the intermediate reel.

4. Device according to one of claims 1, 2 and 3, characterized in that a drive roller (11) with spring, (12), is provided, said drive roller being driven by a motor in such a way as to ensure a constant peripheral speed to the stored tape (5).